# EUROPEAN PATENT SPECIFICATION

(11) **EP 3 262 319 B1**
(45) Date of publication and mention of the grant of the patent: **25.09.2019**
(21) Application number: 16717457.2
(22) Date of filing: 25.02.2016
(51) Int. Cl.: F16H 7/12

(54) **TENSIONER COMPRISING AN IMPROVED DAMPING DEVICE**
SPANNER MIT VERBESSERTER DÄMPFUNGSVORRICHTUNG
TENDEUR COMPRENANT UN DISPOSITIF D'AMORTISSEMENT AMÉLIORÉ

(30) Priority: 25.02.2015 IT TO20150133
(43) Date of publication of application: 03.01.2018
(73) Proprietor: Dayco Europe S.R.L., 66100 Chieti (IT)
(72) Inventor: MONTANI, Andrea, 66010 Torre Vecchia Teatina (IT); LICATA, Federico, 10020 Pecetto Torinese (IT); CARICCIA, Gianluca, 10100 Torino (IT)
(74) Representative: Franzolin, Luigi
(86) International application number: PCT/IB2016/051038
(87) International publication number: WO 2016/135669

(56) References cited:
- EP-A1- 0 866 240
- GB-A- 2 374 394
- US-A1- 2002 010 045

## Description

### TECHNICAL FIELD

The present invention relates to a tensioner for a belt drive of an internal combustion engine, and in particular to a tensioner for a valve train drive, equipped with an improved damping device.

### BACKGROUND ART

In belt drives, one or more tensioners are normally used that exert a tensioning force on the slack sides of the drive belt.

Tensioners generally comprise a base designed to be fastened to the crankcase of the engine and an arm carrying a pulley cooperating with the drive belt and hinged to the base by means of a pin. The tensioning force is usually provided by a torsion spring between the arm and the base.

Tensioners are frequently subjected to large amplitude oscillations during certain operating conditions of the engine, such as, for example, abrupt changes in speed or when starting the engine.

In these conditions, it is necessary that the oscillations are dampened and for this purpose it is necessary to use devices such as, for example, friction bushings or hydraulic dampers, designed to provide high damping torques.

Examples of known tensioners are disclosed in GB 2374394 A, US2002/010045 A1 or EP0866240.

However, the damping characteristics of these devices are not optimized for steady-state engine conditions.

### DISCLOSURE OF INVENTION

The object of the present invention is a tensioner comprising an improved damping device able to overcome the above-mentioned problem in an inexpensive and compact manner.

The above-stated object is achieved with a tensioner comprising an improved damping device according to claim 1.

### BRIEF DESCRIPTION OF THE DRAWINGS

For a better understanding of the present invention, a preferred embodiment is described below, by way of non-limitative example and with reference to the accompanying drawings, where:
Figure 1 is a perspective view of a tensioner forming subject of the invention;
Figure 2 is a partial cross-section of the tensioner in Figure 1;
Figure 3 is a first perspective view of the tensioner in Figure 1 with parts removed for clarity;
Figure 4 is a second perspective view of the tensioner in Figure 1 with parts removed for clarity;
Figure 5 is an enlarged perspective view of the view in Figure 4;
Figure 6 is a graph showing the damping torque as a function of the relative rotation of the elements of the tensioner in Figure 1; and
Figures 7 and 8 are two graphs comparable to the graph in Figure 6, but referring to two different operating conditions of the tensioner in Figure 1.

### BEST MODE FOR CARRYING OUT THE INVENTION

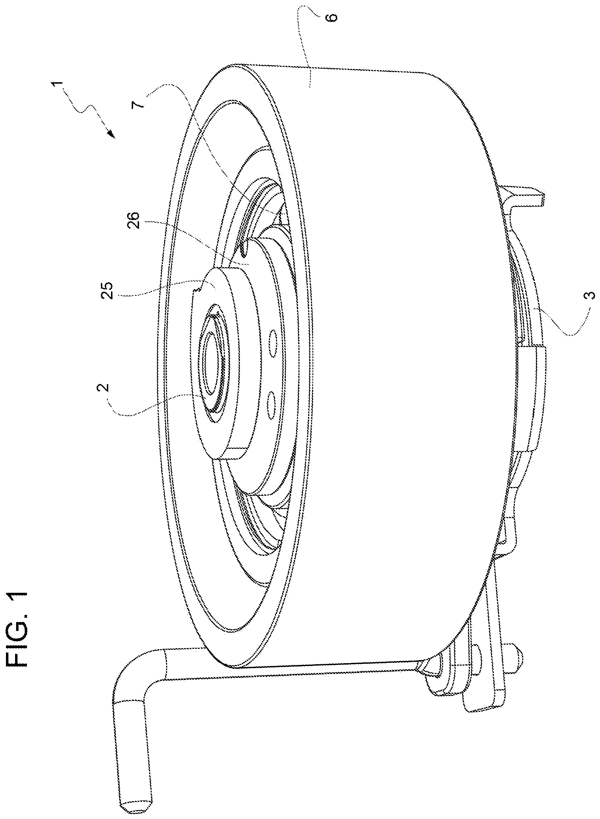

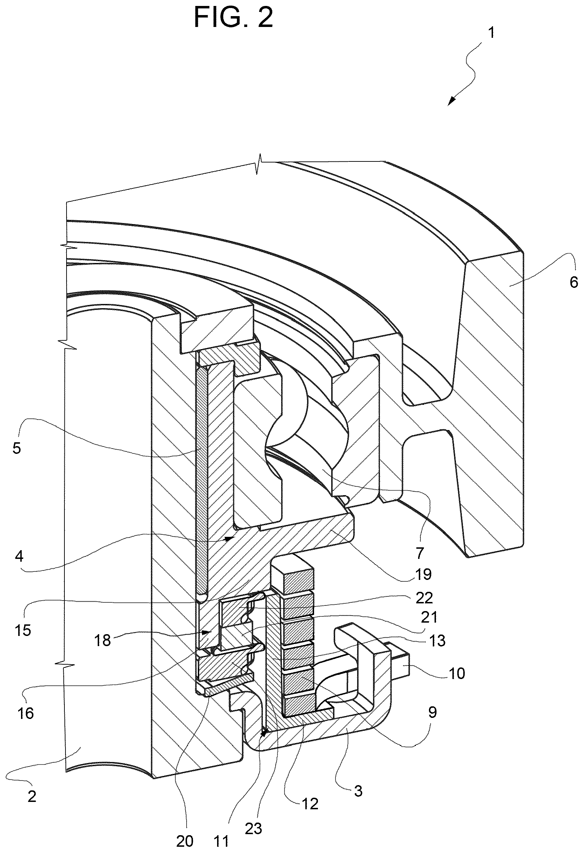

Referring to Figures 1 and 2, a tensioner 1 is shown that comprises a pin 2 suitable for being fastened to the crankcase of an engine (not shown), for example by means of an axial screw, and a base 3 integral with the pin 2. The tensioner 1 also comprises an arm 4, constituted by an eccentric bushing hinged on the pin 2 by means of a bearing, preferably a bushing 5.

A pulley 6 is hinged on the arm 4 and carried eccentrically with respect to the axis of the pin 2. The pulley 6 is mounted to freely rotate on the arm 4 by means of a bearing 7 and is designed to cooperate with a drive belt of the engine (not shown). The arm 4 also comprises a shaped portion 8 extending axially towards the base 3. The tensioner 1 also comprises a torsion spring 9 arranged coaxially to the pin 2, which has one end 10 constrained to the base 3 and its other opposite end (not shown) constrained to an intermediate radial flange 19 of the arm 4.

The shaped portion 8 comprises an annular step 15 adjacent to the flange 19 and an end portion 16 of smaller diameter extending axially towards the base 3.

The tensioner 1 further comprises a bushing 11 made of a plastic material and having a cylindrical portion 13 placed inside the spring 9 and a radial flange 12 placed axially in contact with the base 3.

Between them, the shaped portion 8 and the cylindrical portion 13 of the bushing 11 define an annular chamber 17, radially defined by the vertical segment 13, by surface 16a and by the pin 2 and defined in the axial direction at the top by the first annular projection 15 and by pin 2, and at the bottom by the base 3.

The tensioner 1 further comprises an improved damping device 18 placed in an annular chamber 17 delimited externally by the cylindrical portion 13 of the bushing 11 and internally by the end portion 16 and by the pin 2, and delimited at the top by the step 15 and at the bottom by pin 2 and by the base 3.

The damping device 18 comprises an upper friction ring 22, an intermediate annular element 21, a lower friction ring 23 and a Belleville washer 20.

The annular element 21 is prismatically coupled to the end portion 16 of the arm 4 in a conventional manner (not shown) and has a constant, preferably rectangular, radial section.

The upper friction ring 22 is axially interposed between the annular element 21 and the step 15, while the lower friction ring 23 is interposed between the annular element 21 and the Belleville washer 20, which rests on the pin 2 and exerts an axial force against the lower friction ring 23.

Finally, the tensioner 1 comprises a stop ring 25 integral with the pin 2 and located at its end opposite to that cooperating with the base 3, and a third friction ring 26 axially interposed between the stop ring 25 and the arm 4. The axial force of the Belleville washer 20 is discharged on the stop ring 25 through the third friction ring 26 that rubs in contact against the stop ring 25.

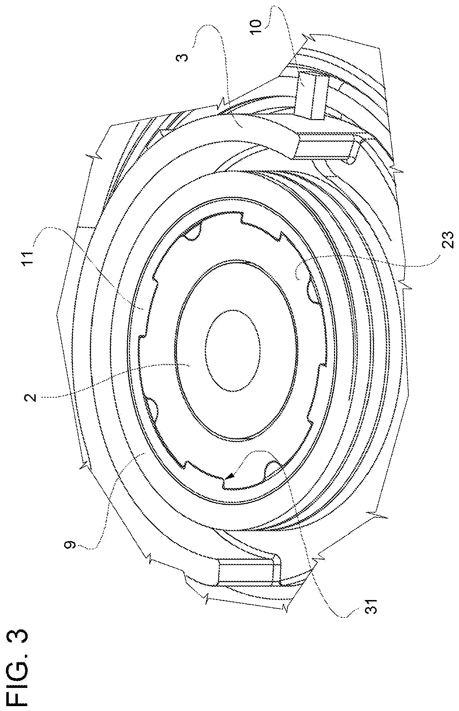

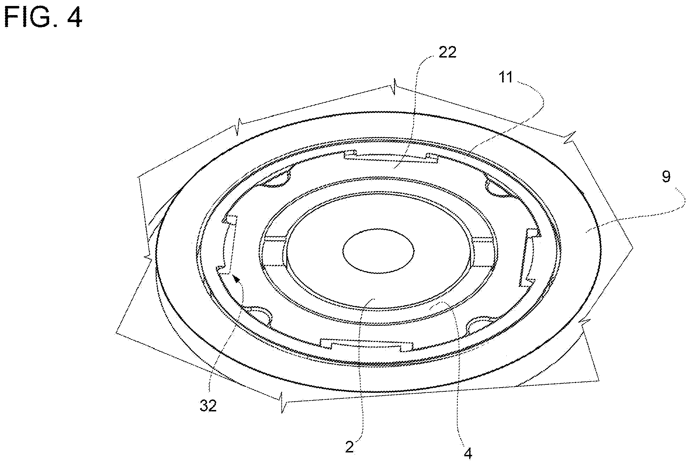

Referring to Figures 3, 4 and 5, the lower friction ring 23 and upper friction ring 22 are coupled to the cylindrical portion 13 of the bushing 11 by means of respective splined couplings 31 and 32.

The splined coupling 31 between the lower friction ring 23 and the cylindrical portion 13 of the bushing 11 is without circumferential play, while the splined coupling 32 between the upper friction ring 22 and the cylindrical portion 13 has circumferential play α of less than 10°, preferably 7°.

Operation of the tensioner 1 is as follows.

The torsion spring 9 is wound so as to exert torque on the arm 4 that carries the pulley 6 in contact with the drive belt. When the drive belt has a change in tension, the arm 4 rotates around the pin 2.

During this rotation, damping D1 is generated by the friction due to rubbing between the lower friction ring 23 integral with the base 3 and the annular element 21 integral with the arm 4. The lower friction ring 23 is pressed against the annular element 21 due the axial force exerted by the Belleville washer 20. Friction due to rubbing between the third friction ring 26 integral with the arm 4 and the stop ring 25 integral with the pin 2 also contributes to the damping D1. The damping D1 is present for any angular excursion of the arm 4 with respect to the base 3.

Assuming that the upper friction ring 22 is arranged in an intermediate angular position with respect to the angular play *α* of the splined coupling 32, then for any oscillation of the arm 4 within an angular play of ±*^{α}*/₂ the upper friction ring 22, by being axially interposed between the step 15 and the annular element 21, is integral with the arm 4. Therefore, no rubbing occurs.

Instead, when the angular oscillation of the arm 4 exceeds this limit, the splined coupling 32 makes the upper friction ring 22 integral with the cylindrical portion 13 of the bushing 11 and therefore with the base 3.

In consequence, the upper friction ring 22 rubs against the annular element 21 and the step 15. Due to friction, this rubbing creates damping D2 that is added to the constantly present damping D1, as previously described.

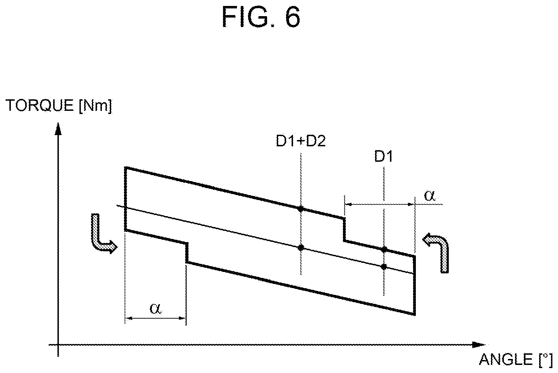

On each reversal in the direction of motion of the arm 4, damping D2 is only present when all of the angular play *α* has been recovered, and so the damping is D1 for rotations of less than *α* and D1+D2 for rotations greater than *α,* as shown in Figure 6, where the damping, in Nm, acting between the arm 4 and the base 3 is shown as a function of the relative angle, in degrees, between the two.

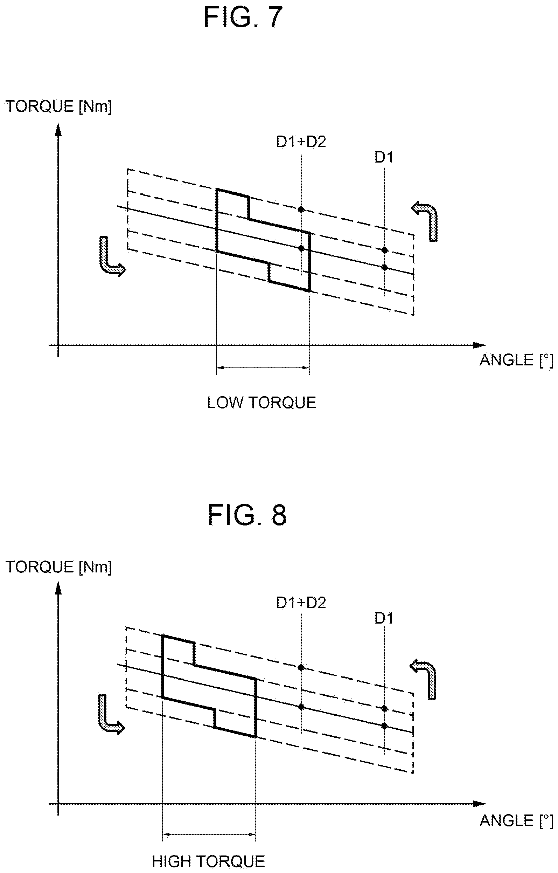

Referring to Figures 7 and 8, it is important to note how the damping device is unaffected by the amount of torque transmitted by the tensioner 1 and is only affected by the amplitude of the relative rotation. In the high torque transmission situation (Fig. 8) or in the low torque transmission situation (Fig. 7), the additional damping D2 only acts when the angular play limit *α* is exceeded.

From an examination of the characteristics of the tensioner 1 according to the present invention, the advantages that can be achieved with it are evident.

The use of a damping device 18 that allows having a tensioner with high damping values only in certain operating conditions of the engine and having relatively low damping values during steady-state conditions allows overcoming the technical problems associated with the known art and described above.

The damper is also compact, simple and inexpensive.

Finally, it is clear that that modifications and variants can be made regarding the described tensioner 1 without departing from the scope defined in the appended claims.

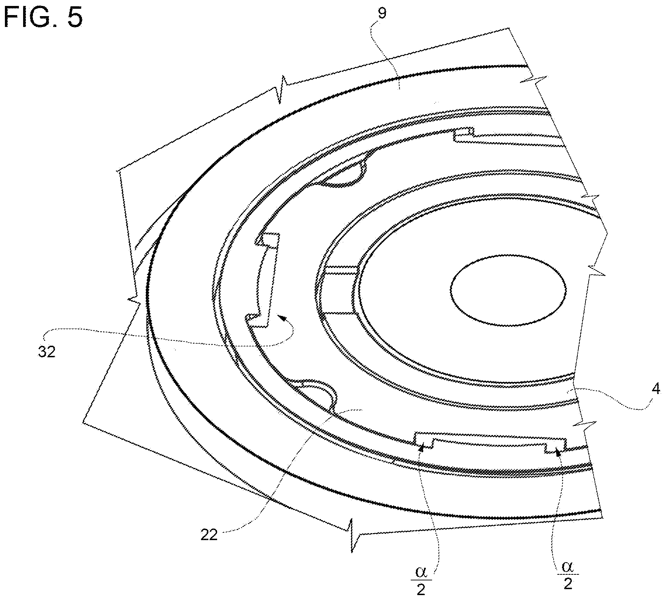

The damping device 18 comprises one of the possible constructional variants that can provide damping dependent on the relative rotation angle between arm 4 and base 3, as shown in Figure 5.

For example, the arrangement of the friction rings 22 and 23 or the mechanical coupling system thereof to the elements integral with the base 3 or the arm 4 could be modified without, however, altering the principle of operation.

## Claims

1. A tensioner for a belt drive of an internal combustion engine, said tensioner (1) comprising a pin (2) and a base (3) adapted to be fixed to a crankcase of said engine, an arm (4) hinged about said pin (2) and a spring (9) interposed between said base (3) and said arm (4), said arm (4) carrying a pulley (6) adapted to cooperate with a drive belt of said belt drive, said tensioner further comprising a damping device (18) adapted to provide a damping of variable value according to a relative rotation angle between said arm (4) and said base (3), **characterized in that** said damping device is configured so as to supply a first constant damping value (D1) for relative rotation angles between said arm (4) and said base (3) smaller than a predetermined angle (α) and a second constant damping value (D1+D2) greater than the first damping value (D1) for relative rotation angles between said arm (4) and said base (3) greater than said predetermined angle (α).

2. The tensioner according to claim 1, **characterized in that** said damping device (18) comprises an annular element (21) carried by an element (8) which is integral with either said arm (4) or said base (3), a first friction ring (23) coupled to another of either said arm (4) or said base (3) and a second friction ring (22) selectively couplable to the other of either said arm (4) or said base (3), said first and second friction rings (23, 22) cooperating with said annular element (21).

3. The tensioner according to claim 2, **characterized in that** said second friction ring (22) is integral with the other of either said arm (4) or said base (3) and slides on said annular element (21) beyond a predetermined relative rotation angle (α) between said arm (4) and said base (3).

4. The tensioner according to any one of the preceding claims, **characterized in that** the value of said relative rotation angle (α) is smaller than 10°.

5. The tensioner according to claim 4, **characterized in that** the value of said relative rotation angle (α) is about 7°.

6. The tensioner according to any one of the preceding claims, **characterized in that** said damping device (18) comprises a Belleville washer (20) adapted to apply a force which keeps said friction rings (22, 23) in contact against said annular element (21).

7. The tensioner according to any one of the preceding claims, **characterized in that** said tensioner (1) comprises a third friction ring (26) placed between said arm (4) and a stop ring (25) which is integral with said pin (2).

## Patentansprüche

1. Spannvorrichtung für einen Riemenantrieb eines Verbrennungsmotors, wobei die Spannvorrichtung (1) Folgendes umfasst: einen Zapfen (2) und ein Basisteil (3), die dafür eingerichtet sind, an einem Kurbelgehäuse des Motors befestigt zu werden, einen Arm (4), der um den Zapfen (2) schwenkbar montiert ist, und eine Feder (9), die zwischen dem Basisteil (3) und dem Arm (4) angeordnet ist, wobei der Arm (4) eine Riemenscheibe (6) trägt, die dafür eingerichtet ist, mit einem Antriebsriemen des Riemenantriebs zusammenzuarbeiten, wobei die Spannvorrichtung außerdem eine Dämpfungsvorrichtung (18) umfasst, die dafür eingerichtet ist, entsprechend einem relativen Verdrehungswinkel zwischen dem Arm (4) und dem Basisteil (3) eine Dämpfung von veränderlicher Stärke bereitzustellen, **dadurch gekennzeichnet, dass** die Dämpfungsvorrichtung dafür eingerichtet ist, für relative Verdrehungswinkel zwischen dem Arm (4) und dem Basisteil (3), die kleiner sind als ein vorgegebener Winkel (α), eine erste konstante Dämpfungsstärke (D1) bereitzustellen, sowie für relative Verdrehungswinkel zwischen dem Arm (4) und dem Basisteil (3), die größer sind als der vorgegebene Winkel (α), eine zweite konstante Dämpfungsstärke (D1 + D2), die größer ist als die erste Dämpfungsstärke (D1).

2. Spannvorrichtung nach Anspruch 1, **dadurch gekennzeichnet, dass** die Dämpfungsvorrichtung (18) Folgendes umfasst: ein ringförmiges Element (21), das von einem Element (8) getragen wird, das integral mit entweder dem Arm (4) oder dem Basisteil (3) ausgeführt ist, einen ersten Reibungsring (23), der mit einem weiteren von entweder dem Arm (4) oder dem Basisteil (3) verbunden ist, und einen zweiten Reibungsring (22), der selektiv mit dem anderen von entweder dem Arm (4) oder dem Basisteil (3) verbunden ist, wobei der erste und zweite Reibungsring (23, 22) mit dem ringförmigen Element (21) zusammenarbeiten.

3. Spannvorrichtung nach Anspruch 2, **dadurch gekennzeichnet, dass** der zweite Reibungsring (22) integral mit dem anderen von entweder dem Arm (4) oder dem Basisteil (3) ausgeführt ist und jenseits eines vorgegebenen relativen Verdrehungswinkels (α) zwischen dem Arm (4) und dem Basisteil (3) auf dem ringförmigen Element (21) gleitet.

4. Spannvorrichtung nach einem der vorhergehenden Ansprüche, **dadurch gekennzeichnet, dass** die Größe des relativen Verdrehungswinkels (α) kleiner als 10° ist.

5. Spannvorrichtung nach Anspruch 4, **dadurch gekennzeichnet, dass** die Größe des relativen Verdrehungswinkels (α) etwa 7° beträgt.

6. Spannvorrichtung nach einem der vorhergehenden Ansprüche, **dadurch gekennzeichnet, dass** die Dämpfungsvorrichtung (18) eine Tellerfeder (20) umfasst, die dafür eingerichtet ist, eine Kraft anzuwenden, die die Reibungsringe (22, 23) im Kontakt gegen das ringförmige Element (21) hält.

7. Spannvorrichtung nach einem der vorhergehenden Ansprüche, **dadurch gekennzeichnet, dass** die Spannvorrichtung (1) einen dritten Reibungsring (26) umfasst, der zwischen dem Arm (4) und einem Anschlagring (25) angeordnet ist, der integral mit dem Zapfen (2) ausgeführt ist.

## Revendications

1. Tendeur pour un entraînement par courroie d'un moteur à combustion interne, ledit tendeur (1) comprenant un axe (2) et une base (3) adaptés pour être fixés à un carter dudit moteur, un bras (4) articulé autour dudit axe (2) et un ressort (9) interposé entre ladite base (3) et ledit bras (4), ledit bras (4) portant une poulie (6) adaptée pour coopérer avec une courroie d'entraînement dudit entraînement par courroie, ledit tendeur comprenant en outre un dispositif d'amortissement (18) adapté pour fournir un amortissement de valeur variable en fonction d'un angle de rotation relatif entre ledit bras (4) et ladite base (3), **caractérisé en ce que** ledit dispositif d'amortissement est configuré de manière à fournir une première valeur d'amortissement constante (D1) pour des angles de rotation relatifs entre ledit bras (4) et ladite base (3) inférieurs à un angle (α) prédéterminé et une seconde valeur d'amortissement constante (D1+D2) supérieure à la première valeur d'amortissement (D1) pour des angles de rotation relatifs entre ledit bras (4) et ladite base (3) supérieurs audit angle (α) prédéterminé.

2. Tendeur selon la revendication 1, **caractérisé en ce que** ledit dispositif d'amortissement (18) comprend un élément annulaire (21) porté par un élément (8) qui fait corps avec soit ledit bras (4) soit ladite base (3), un premier anneau de friction (23) accouplé à un autre de soit ledit bras (4) soit ladite base (3) et un deuxième anneau de friction (22) pouvant être sélectivement accouplé à l'autre de soit ledit bras (4) soit ladite base (3), lesdits premier et deuxième anneaux de friction (23, 22) coopérant avec ledit élément annulaire (21).

3. Tendeur selon la revendication 2, **caractérisé en ce que** ledit deuxième anneau de friction (22) fait corps avec l'autre de soit ledit bras (4) soit ladite base (3) et coulisse sur ledit élément annulaire (21) au-delà d'un angle de rotation relatif (α) prédéterminé entre ledit bras (4) et ladite base (3).

4. Tendeur selon l'une quelconque des revendications précédentes, **caractérisé en ce que** la valeur dudit angle de rotation relatif (α) prédéterminé est inférieure à 10°.

5. Tendeur selon la revendication 4, **caractérisé en ce que** la valeur dudit angle de rotation relatif (α) est d'environ 7°.

6. Tendeur selon l'une quelconque des revendications précédentes, **caractérisé en ce que** ledit dispositif d'amortissement (18) comprend une rondelle Belleville (20) adaptée pour appliquer une force qui maintient lesdits anneaux de friction (22, 23) en contact contre ledit élément annulaire (21).

7. Tendeur selon l'une quelconque des revendications précédentes, **caractérisé en ce que** ledit tendeur (1) comprend un troisième anneau de friction (26) placé entre ledit bras (4) et un anneau de butée (25) qui fait corps avec ledit axe (2).
